Europäisches Patentamt

European Patent Office

Office européen des brevets

(19)

(11) Veröffentlichungsnummer : **0 141 376
B1**

(12)            # EUROPÄISCHE PATENTSCHRIFT

(45) Veröffentlichungstag der Patentschrift :
**19.08.87**

(21) Anmeldenummer : **84112825.9**

(22) Anmeldetag : **24.10.84**

(51) Int. Cl.⁴ : **F 24 F 12/00, F 24 F 7/02**

---

(54) **Regenerativer Wärmerückgewinner.**

---

(30) Priorität : **25.10.83 DE 3338655**

(43) Veröffentlichungstag der Anmeldung :
**15.05.85 Patentblatt 85/20**

(45) Bekanntmachung des Hinweises auf die Patenterteilung : **19.08.87 Patentblatt 87/34**

(84) Benannte Vertragsstaaten :
**AT BE CH DE GB LI NL SE**

(56) Entgegenhaltungen :
**DE-A- 2 713 424
DE-A- 2 910 423
FR-A- 1 397 214
GB-A- 2 065 294
US-A- 3 042 383
US-A- 3 456 718
US-A- 4 321 961**

(73) Patentinhaber : **LTG Lufttechnische GmbH
Wernerstrasse 119-129
D-7000 Stuttgart 40 (DE)**

(72) Erfinder : **Hönmann, Winfried, Dr.-Ing.
Günzelburgweg 4
D-7000 Stuttgart 30 (DE)**

(74) Vertreter : **König, Oskar, Dr.-Ing. Dipl.-Phys.
Klüpfelstrasse 6 Postfach 51
D-7000 Stuttgart 1 (DE)**

EP 0 141 376 B1

## Beschreibung

Die Erfindung betrifft einen der Raumbelüftung und Wärmerückgewinnung dienenden regenerativen Wärmerückgewinner gemäß dem Oberbegriff des Anspruches 1.

Es ist ein der direkten Belüftung von Räumen dienender Wärmerückgewinner bekannt (DE-A-27 13 424), der zwei zueinander parallele, gerade Kanäle für die Zuluft und die Abluft aufweist. In jedem dieser beiden Kanäle ist je ein Axialventilator zum Fördern der Zuluft und Abluft angeordnet. Ferner weist dieser Wärmerückgewinner eine rotierend antreibbare, scheibenförmige Speichermasse auf, die sich zum Teil im Zuluftkanal und zum Teil im Abluftkanal befindet und der Wärmeübertragung zwischen der Abluft und der Zuluft dient. Dieser Wärmerückgewinner ist vertikal in ein Flachdach des zu belüftenden Raumens eingebaut und bläst die Abluft vertikal nach oben aus. Die Zuluft saugt er dagegen durch in der Kanalumfangswand angeordnete radiale Öffnungen am oberen Ende des Zuluftkanales ein. Dieser Wärmerückgewinner hat relativ große axiale Länge. Auch kann bei Regen in seinen vertikalen Zuluftkanal viel Regenwasser gelangen, welches dann unvermeidlich in die Speichermasse eindringt. Bei abgestelltem Abluftventilator kann auch in den Abluftkanal Regenwasser eindringen und fällt dann in abwärtiger Richtung auf die Speichermasse und kann durch sie hindurch in den Raum einströmen. Es sind deshalb zusätzliche Maßnahmen erforderlich, um diesen Wärmerückgewinner gegen Regeneinfall zu schützen. Auch benötigt er eine Dachöffnung, deren Durchmesser fast so groß wie der der Speichermasse ist.

Es ist eine Aufgabe der Erfindung, einen regenerativen Wärmerückgewinner der eingangs genannten Art zu schaffen, der bei kompakter, kostengünstiger, einfacher Bauart ohne zusätzliche Maßnahmen gegen Regeneinfall geschützt ist und mit relativ kleinen Dachöffnungen auskommt.

Diese Aufgabe wird erfindungsgemäß durch einen regenerativen Wärmerückgewinner gemäß Anspruch 1 gelöst.

Bei dem erfindungsgemäßen Wärmerückgewinner befinden sich infolge der 180°-Umlenkung des Zuluftkanales und des Abluftkanales deren Einlaß- bzw. Auslaßmündungen unterhalb des Speichermasseringes, so daß hierdurch bei abgestellten Ventilatoren beide Kanäle gegen Eindringen von Regenwasser sicher geschützt sind. Wenn die Ventilatoren eingeschaltet sind, vermag zwar die in den Zuluftkanal eingesaugte Luft unter Umständen noch Regenwasser mitzuführen, doch dieses beaufschlagt die Speichermasse nicht wie bei dem bekannten Wärmerückgewinner von oben, sondern von unten, so daß hierdurch allenfalls nur ein verhältnismäßig kleiner Anteil von Regenwasser wenn überhaupt bis zur Speichermasse gelangen kann und dieses hat dann auch nicht die Tendenz, durch Schwerkraftwirkung durch die Speichermasse hindurch zu gelangen, sondern von der Speichermasse wieder abzutropfen bzw., wenn mit Regenwasser beaufschlagte Speichermasse in den Abluftkanal gelangt, bläst die Abluft dieses Regenwasser aus der Speichermasse heraus zur abwärtigen Auslaßmündung des Abluftkanales.

Dieser erfindungsgemäße regenerative Wärmerückgewinner ist deshalb gegen Regen durch seine Bauart gut geschützt, so daß keine zusätzlichen Schutzmaßnahmen gegen Regen erforderlich sind.

Der erfindungsgemäße regenerative Wärmerückgewinner hat auch kompakte Bauart, benötigt nur relativ kurze axiale Baulänge und ermöglicht gute Wärmeaustausch-Wirkungsgrade. Insbesondere eignet er sich hervorragend auch dazu, einen direkt unter dem betreffenden Dach befindlichen Raum zu belüften, wobei sein Abluft-Einlaß und sein Zuluft-Auslaß nicht oder nur wenig über die Decke des betreffenden Raumes nach unten vorzustehen braucht. Es ist jedoch auch möglich, seinen Zuluftauslaß und Ablufteinlaß über Luftkanäle an mindestens einen nicht an das Dach angrenzenden Raum anzuschließen. Auch benötigt er bei gegebenem Volumen der Speichermasse nur relativ kleine Dachöffnungen, da ihre Durchmesser nicht größer als die der mittigen Öffnung des Speichermasseringes zu sein brauchen.

Die Ventilatorräder können platzsparend in den beiden 180°-Kanalzwischenabschnitten angeordnet und vorzugsweise Radialventilatorräder sein. Es sind jedoch auch andere Anordnungen und Ausbildungen der Ventilatoren bzw. ihrer Ventilatorräder möglich, beispielsweise ihre Ausbildung als Axialventilatoren und beispielsweise ihre Anordnung unterhalb des Speichermasseringes. Doch ist die Anordnung gemäß Anspruch 2 besonders platzsparend und gut geschützt.

Der Wärmerückgewinner tauscht Wärme zwischen der Abluft und der Zuluft aus, wobei er normalerweise der Abluft Wärme entzieht und sie auf die Zuluft überträgt. Es handelt sich bei dieser Wärme um fühlbare Wärme wie ggfs. auch um Feuchtigkeitswärme. Der Aufbau der Speichermasse kann von an sich bekannter Art sein. Sie weist sie axial durchdringende Kanäle auf, die von der Zuluft und Abluft gegensinnig durchströmt werden.

Durch den Wärmerückgewinner kann ein beträchtlicher Anteil der mit der Abluft mitgeführten Wärme durch Übertragung auf die Zuluft zurückgewonnen werden. Dies ist besonders bei Winterbetrieb wichtig. Im Sommerbetrieb und in der Übergangszeit zwischen Winter und Sommer, also im Frühjahr und Herbst ist keine Wärmerückgewinnung notwendig oder nur zeitweise. Der erfindungsgemäße Wärmerückgewinner erlaubt auf einfache Weise mit nur geringem Mehraufwand Weiterbildungen, die es ermöglichen, ihn so umzuschalten, daß der Wärmeaustausch zwischen Abluft und Zuluft bei weiterhin stattfindendem Belüftungsbetrieb ganz oder im wesentlichen unterbunden wird und/oder die Lüftung bei ganz oder im wesentlichen unterbundenem Wärmeaustausch zu verstärken.

Zum völligen oder nahezu völligen Unterbinden des Wärmeaustausches zwischen Abluft und Zuluft kann gemäß einer Weiterbildung der Erfindung vorgesehen sein, daß der Zuluftkanal zwischen dem Speichermassering und dem Ventilatorrad einen absperrbaren Zusatzeinlaß für Zuluft aufweist und/oder daß der Abluftkanal zwischen dem Ventilatorrad und dem Speichermassering einen absperrbaren Zusatzauslaß für Abluft aufweist. Jede dieser beiden Maßnahmen für sich erlaubt bereits vollständige oder weitgehende Abschaltung des Wärmeaustausches zwischen Abluft und Zuluft. Jedoch können vorzugsweise beide Maßnahmen gleichzeitig vorgesehen sein, da hierdurch u. a. in beiden Kanälen die Strömungsverluste gesenkt werden.

Das im Zuluftkanal angeordnete Ventilatorrad saugt bei geöffnetem Zusatzeinlaß die Zuluft durch diesen Zusatzeinlaß an und nicht mehr oder nur noch in unwentlichem Umfange durch die Speichermasse hindurch, da letztere relativ hohen Strömungswiderstand hat. Entsprechend bläst das im Abluftkanal befindliche Ventilatorrad die Abluft vollständig oder im wesentlichen durch den Zusatzauslaß aus, wenn dieser geöffnet ist. Es bedarf also keiner Absperrung der Speichermasse selbst gegen Luftdurchtritt, da die Speichermasse wegen ihres Strömungswiderstandes bei geöffnetem Zusatzauslaß für die Abluft bzw. geöffnetem Zusatzeinlaß für die Zuluft, wenn überhaupt, nur noch in unbedeutendem Umfange von Abluft bzw. Zuluft durchströmt wird. Man kann dann zur Energieeinsparung auch den ggfs. vorhandenen Antriebsmotor des Speichermasseringes ausschalten. Es kann jedoch ggfs. auch vorgesehen sein, daß die Speichermasse bei geöffnetem Zusatzauslaß bzw. Zusatzeinlaß luftseitig gegen die Abluftströmung bzw. Zuluftströmung vollständig abgesperrt wird, bspw. durch Klappen. Jedoch ist dieser zusätzliche Aufwand im allgemeinen nicht notwendig, sondern es ist baulich einfach und auch betriebssicherer, die Speichermasse nicht zuluft- und abluftseitig abzusperren, wenn der Zusatzauslaß bzw. der Zusatzeinlaß geöffnet werden.

Des weiteren kann gemäß einer vorteilhaften Weiterbildung der Erfindung vorgesehen sein, daß das in dem Zuluftkanal befindliche Ventilatorrad um 180° in eine dem Fördern von Abluft dienende Stellung schwenkbar ist. Dieses Ventilatorrad fördert dann in dieser geschwenkten Stellung keine Zuluft, sondern ebenfalls Abluft, wodurch im Sommerbetrieb und ggfs. auch im Übergangsbetrieb die Lüftung des oder der durch diesen Wärmerückgewinner belüfteten Räume wesentlich verstärkt wird, indem dann ungefähr die doppelte Abluftmenge von diesem Wärmerückgewinner gefördert wird. Er fördert dann keine Zuluft in den oder die betreffenden Räume, so daß dann die Zuluft durch andere Öffnungen einströmt bzw. durch geöffnete Fenster, Türschlitze oder dergl.

Wenn der Wärmerückgewinner auf Übergangs- oder Sommerbetrieb eingestellt wird durch Öffnen des Zusatzauslasses und/oder Zusatzeinlasses, reduzieren sich auch die Leistungsaufnahme und damit die Betriebskosten des oder der Ventilatoren, da diese nicht mehr die Luft durch die Speichermasse hindurch fördern müssen. Diese Leistungsersparnis kann dadurch noch erhöht werden, indem vorgesehen wird, daß die Drehzahl mindestens eines Ventilatorrades verstellbar ist, vorzugsweise es durch einen polumschaltbaren Motor angetrieben wird. Die Drehzahlverstellung kann dabei mit dem Öffnen und Schließen des betreffenden Zusatzeinlasses bzw. Zusatzauslasses gekoppelt sein, so daß bei geöffnetem Zusatzeinlaß bzw. Zusatzauslaß die Drehzahl des betreffenden Ventilatorrades selbsttätig zur Verringerung der Leistungsaufnahme verringert wird. Wegen des viel geringeren Strömungswiderstandes ist die Förderleistung des Ventilatorrades dennoch hoch.

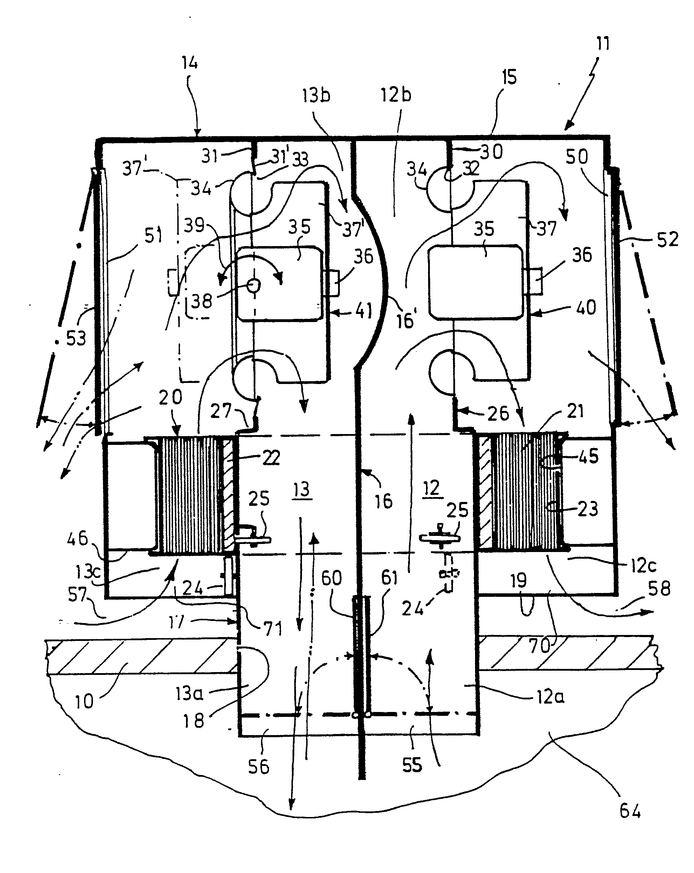

In der Zeichnung ist ein Ausführungsbeispiel der Erfindung dargestellt.

Die einzige Figur zeigt in schematischer, geschnittener Seitenansicht ein Dach 10 eines großen Gebäuderaumes, in welches Dach 10 ein regenerativer Wärmerückgewinner 11 gemäß einem Ausführungsbeispiel der Erfindung vertikal eingebaut ist. Bei dem durch dieses Dach 10 obenseitig begrenzten, durch den Wärmerückgewinner 11 allein oder in Verbindung mit weiteren Wärmerückgewinnern dieser Art zu belüftenden Raum kann es sich bspw. um einen größeren Fabrikationsraum, eine Sporthalle oder einen sonstigen Raum handeln.

Der Wärmerückgewinner 11 weist äußerlich eine pilzähnliche Gestalt auf und hat einen Abluftkanal 12 und einen Zuluftkanal 13, die im wesentlichen zueinander symmetrisch angeordnet und ausgebildet sind. Jeder der beiden Kanäle 12, 13 weist je zwei zueinander parallele, gerade Kanalendabschnitte 12a, 12c bzw. 13a, 13c auf, die durch je einen 180°-Kanalzwischenabschnitt 12b, 13b miteinander verbunden sind, so daß der Abluftkanal 12 wie auch der Zuluftkanal 13 praktisch haarnadelförmige Verläufe haben. Beide Kanäle 12, 13 enthalten je einen Radialventilator 40, 41.

Das Gehäuse des Wärmerückgewinners 11 weist eine topfförmige Haube 14 auf, die runden, rechteckförmigen oder quadratischen oder sonstigen geeigneten Umriß haben kann und deren zum Dach 10 parallele Decke 15 eben und luftundurchlässig ist. In diese Haube 14 ist eine sie wie auch die vertikalen Stutzen 17 und 26 in ungefähr zwei gleiche Hälften teilende vertikale mittlere Trennwand 16 eingesetzt, die den Zuluftkanal 13 von dem Abluftkanal 12 vollständig trennt. Diese Trennwand 16 ist mit Ausnahme einer schwachen Auswölbung 16' eben. Diese mit der Haube 14 fest verbundene Trennwand 16 durchdringt also auch den zentralen, vertikalen, im Querschnitt kreisrunden Stutzen 17 und ist nur in ihm über die Haube 14 nach unten verlängert und unterteilt ihn in zwei Kanalendabschnitte 13a, 12a für die Zuluft und die Abluft.

Dieser die Auslaßmündung 56 des Zuluftkanales 13 und die Einlaßmündung 55 des Abluftkanales 12 am unteren Ende aufweisende Stutzen 17 durchdringt eine kreisrunde Dachöffnung 18 ein kurzes Stück nach unten aus ihr herausragend und ist an dem Dach 10 fest angeordnet und trägt den Zusatzeinlaß geöffnet er 11.

Die Haube 14 endet im Abstand oberhalb des Daches 10, so daß durch den Zwischenraum zwischen ihrem unteren Rand 19 und dem Dach 10 Zuluft aus der Außenatmosphäre in den Zulufteinlaß 71 des Kanalendabschnittes 13c der betreffenden Haubenhälfte einströmen bzw. Abluft aus dem Abluftauslaß 70 des Kanalendabschnittes 12c der anderen Haubenhälfte in die Außenatmosphäre ausströmen kann.

Der obere Bereich des Stutzens 17 durchdringt die mittlere Öffnung eines mit vertikaler Drehachse rotierbaren Speichermasseringes 20, der im wesentlichen aus einem Ring aus axial von der Zuluft und Abluft durchströmbarer Speichermasse 21 zwecks Wärmerückgewinnung besteht. Die Zuluft und die Abluft durchströmen jeweils ungefähr eine Hälfte der Speichermasse 21. Dieser Speichermassering 20 weist einen runden, luftundurchlässigen Innenmantel 22 und einen runden luftundurchlässigen Außenmantel 23 auf, die den Ring aus Speichermasse 21 zwischen sich halten und durch radiale Stege miteinander verbunden sind. Der Innenmantel 22 ist auf an dem Stutzen 17 gehaltenen Tragrollen 24, deren Drehachsen horizontal sind, gelagert, die diesen Speichermassering 20 tragen. Der radialen Lagesicherung dieses Speichermasseringes 20 dienen Stützrollen 25 mit vertikalen Drehachsen, die ebenfalls von dem Stutzen 17 getragen werden und durch schmale Schlitze in der Umfangswandung des Stutzens 17 hindurchragend an dem Innenmantel 22 des Speicherringes 20 zu dessen radialer Lagesicherung anliegen. Der Speichermassering 20 wird durch einen nicht dargestellten, in der Haube 14 angeordneten Elektromotor bspw. über ein Zugmittelgetriebe oder Reibradgetriebe so angetrieben, daß er um seine vertikale Drehachse langsam rotiert, und zwar mit einigen Umdrehungen pro Minute zwecks Wärmerückgewinnung.

An das obere Ende des geraden Stutzens 17 ist ein im Querschnitt rechteckförmiger Verlängerungsstutzen 26 über einen Verbindungsflansch 27 angeschlossen, durch den auch die Trennwand 16 diametral hindurchgeht und der bis zur Haubendecke 15 reicht und sich in allseitigem Abstand von der Außenumfangswandung der Haube 14 befindet. Wie erwähnt, unterteilt die vertikale Trennwand 16 die Haube 14 in zwei vollständig getrennte Hälften für die Zuluft und die Abluft, erstreckt sich also auch außenseitig der Stutzen 26 und 17 bis zur Umfangswand der Haube 14.

In den beiden einander diametral gegenüberliegenden ebenen Wänden 30, 31 dieses Verlängerungsstutzens 26 ist je eine kreisrunde Öffnung 32, 33 vorhanden, wobei die Öffnung 33 durch eine elastische Ringlippe 31' gebildet ist, um Schwenken des Ventilators 41 zuzulassen. An den Rändern dieser Öffnungen 32, 33 liegen die Außenumfänge von Einströmdüsen 34 der Radialventilatoren 40, 41, die keine Leitgehäuse haben, an. Diese Radialventilatoren 40, 41 bestehen hier nur aus den Motoren 35, den von diesen angetriebenen Laufrädern 37, 37' und den Einströmdüsen 34. Die Elektromotoren 35 dieser Radialventilatoren 40, 41 haben horizontale, miteinander fluchtende Drehachsen und ihre Wellenzapfen 36 tragen die Ventilatorräder, d. h. Laufräder 37, 37'. Die Düsen 34 sind mittels Streben an den von den Wellenzapfen 36 abgewendeten Stirnseiten der Gehäuse der Elektromotoren 35 gehalten. Wie dargestellt, münden die Luftaustrittsöffnungen der Laufräder 37, 37' frei in den Zuluftkanal 13 bzw. den Abluftkanal 12, so daß sie nicht in sonst bei Radialventilatoren übliche Spiralleitgehäuse ausblasen, sondern frei in den Abluftkanal 12 bzw. den Zuluftkanal 13 ausblasen, was baulich einfacher und kostengünstiger ist und auch geringe Geräuschentwicklung, geringe dynamische Verluste und große Volumenströme und auch gleichmäßigeres Anströmen des jeweils stromabwärtigen Bereiches der Speichermasse als bei Vorhandensein spiralförmiger Leitgehäuse ergibt. Dabei bilden die dem Laufrad 37 bzw. 37' benachbarten Bereiche der Decken- und Seitenwände des Abluft- bzw. Zuluftkanales 12 bzw. 13 ein nach unten offenes, bspw. ungefähr rechteckförmige Querschnitte aufweisendes Gehäuse für das Laufrad 37 bzw. 37'. Es kann jedoch auch vorgesehen sein, wenn z. B. höhere Blasgeschwindigkeiten erwünscht sind, das Laufrad 37 und/oder 37' in einem üblichen Leitgehäuse, wie einem Spiralleitgehäuse oder quaderförmigen Leitgehäuse, anzuordnen, mit dem zusammen es als eine Baueinheit in den Abluft- bzw. Zuluftkanal eingesetzt ist, die so einem üblichen Radialventilator entspricht.

Die Düsen 34 führen in die Einströmöffnungen der Laufräder 37, 37'. Der im Zuluftkanal 13 befindliche Ventilator 41 befindet sich in der Zeichnung in der dem Fördern von Zuluft in Richtung der voll ausgezogenen Pfeile dienenden Stellung. Jedoch ist er im ganzen um eine horizontale, senkrecht zu seiner Drehachse gerichtete Schwenkachse 38 um 180° in Richtung des Doppelpfeiles 39 schwenkbar gelagert, so daß er aus der dargestellten Stellung in eine um 180° winkelversetzte Stellung verschwenkt werden kann, in der dann seine Förderrichtung entsprechend umgekehrt ist und er dann anstatt Zuluft Abluft fördert. Um dieses Schwenken zu ermöglichen, kann die mittlere Trennwand 16 die im Querschnitt kreisbogenförmige Auswölbung 16' aufweisen. Dieses Schwenken des Ventilators 41 kann bspw. mittels eines elektrischen Stellmotors erfolgen, der an der diesen Motor tragenden Seitenwand 31 angeordnet sein kann, oder von Hand mittels eines Hebels, Seilzugs oder dergl. Die um 180° geschwenkte Stellung des Ventilators 41 ist strichpunktiert angedeutet.

Der Außenmantel 23 des Speichermasseringes 20 weist zwei nach außen gerichtete Flansche auf, die einen in die Haube eingesetzten, den Speichermassering 20 in seiner mittigen, kreisrunden Öffnung 45 aufnehmenden Zwischenboden 46 zur Abdichtung oben und unten überlappen.

Es sind ferner in den beiden der Trennwand 16 gegenüberliegenden Außenwandbereichen der Haube 14 absperrbare Luftdurchlaßöffnungen 50, 51 angeordnet. Und zwar handelt es sich um breite und hohe Luftdurchtrittsöffnungen 50, 51, die sich oberhalb des Speichermasseringes 20 gegenüber den Ventilatoren 40, 41 befinden und durch je eine schwenkbare Ausstellklappe 52, 53 geöffnet und geschlossen werden können. Diese beiden Ausstellklappen 52, 53 sind an ihren oberen Rändern an die Haube 14 schwenkbar angelenkt. Diese beiden Klappen 52, 53 können durch ebenfalls nicht dargestellte elektrische Stellmotoren in ihre voll ausgezogen dargestellten Absperrstellungen verschwenkt werden. Dieses Verschwenken kann, wie bereits erwähnt, erwünschtenfalls mit einer Drehzahlverstellung der Drehzahlen der Ventilatoren 40, 41 gekoppelt sein, falls deren Antriebsmotoren drehzahlverstellbar sind. Die höchsten Drehzahlen werden dann eingestellt, wenn die Klappen 52, 53 sich in ihren Absperrstellungen befinden.

Die Arbeitsweise dieses Wärmerückgewinners 10 ist wie folgt : Im Wärmerückgewinnungsbetrieb, also insbesondere bei Winterbetrieb, sind die beiden Klappen 52, 53 geschlossen und der Zuluftventilator 41 ist in die in der Zeichnung dargestellte Stellung geschwenkt. Die gesamte Zuluft strömt, wie durch die voll ausgezogenen Pfeile dargestellt, wegen der geschlossenen Klappe 53 durch den linksseitig der Trennwand 16 befindlichen Spalt 57 zwischen der Haube 14 und dem Dach 10 in den am unteren Rand dieser linken Hälfte der Haube 14 beginnenden, geraden, vertikal aufwärtsführenden Kanalendabschnitt 13 c ein und durchströmt in diesem Kanalabschnitt die in ihm jeweils befindliche Hälfte der rotierenden Speichermasse 21 axial und nimmt aus ihr fühlbare Wärme und ggfs. Feuchtigkeitswärme auf. Die von dem Ventilator 41 geförderte Zuluft durchströmt dann den 180°-Kanalzwischenabschnitt 13b, den man sich hier als in Höhe des Flansches 27 beginnend und wieder endend denken kann. Diese Zuluft durchströmt im Kanalabschnitt 13b das sie fördernde Laufrad 37′ des Radialventilators 41 und strömt dann in vertikal abwärts führender Richtung bis sie aus der Auslaßmündung 56 der linken Hälfte des Stutzens 17 und damit aus dem Zuluftkanal 13 ausströmt. Die Ausströmmündung 56 des Zuluftkanales 13 kann in diesem Ausführungsbeispiel mittels einer sich normalerweise in ihrer voll ausgezogen dargestellten Offenstellung befindlichen Klappe 60 durch Schwenken in ihre strichpunktierte Absperrstellung abgesperrt werden, wenn dieser Wärmerückgewinner 11 ausgeschaltet wird.

Die Abluft wird, wie durch voll ausgezogene Strömungspfeile dargestellt, durch den Abluftventilator 40 in die vertikal aufwärts führende rechte Hälfte des Stutzens 17, also in den Kanalendabschnitt 12a, eingesaugt und strömt dann in den 180°-Kanalzwischenabschnitt 12b ein, der in diesem Ausführungsbeispiel wiederum als in Höhe des Flansches 27 beginnend und endend gedacht werden kann. Diese Abluft durchströmt dabei das Laufrad 37 des Ventilators 40 und von diesem aus dann nach unten durch die betreffende Hälfte der Speichermasse 21 diese axial durchströmend hindurch und gelangt dann durch den Spalt 58 zwischen der rechten Hälfte der Haube 14 und dem Dach 10 ins Freie. Die Abluft gibt an die Speichermasse 21 Wärme ab.

Um Kurzschluß zwischen der Zuluft und Abluft zu vermeiden, ragt die mittlere Trennwand 16 aus dem Stutzen 17 ein Stück nach unten heraus.

Auch derAblufteinlaß 55 kann durch eine Absperrklappe 61 abgesperrt werden, die sich normalerweise in ihrer dargestellten Offenstellung befindet und nur bei abgeschaltetem Ventilator 40 in die strichpunktierte Geschlossenstellung geschwenkt wird. Diese beiden Absperrklappen 60, 61 können durch einen gemeinsamen Stellmotor geöffnet und abgesperrt werden, vorzugsweise selbsttätig im Gefolge des Ein- und Ausschaltens der Ventilatoren 40, 41.

Wenn nur Lüftung und keine Wärmeübertragung zwischen Abluft und Zuluft notwendig ist, also insbesondere zeitweise im Übergangsbetrieb und bei Sommerbetrieb, werden die beiden Klappen 52, 53 geöffnet. Es strömt dann die Zuluft und Abluft fast ausschließlich durch die Öffnungen 51 und 50 unter Umgehung der Speichermasse 20 hindurch, wie durch die strichpunktierten Strömungspfeile angedeutet ist. Und zwar wird dann praktisch die gesamte Zuluft und Abluft durch diese Luftdurchtrittsöffnungen 51 und 50 eingesaugt bzw. ausgeblasen, da deren Strömungswiderstände vernachlässigbar klein sind gegenüber den Strömungswiderständen der Speichermasse 20 im Zuluftkanal 13 und Abluftkanal 12. Es ist deshalb nicht notwendig, die Speichermasse 20 luftseitig abzusperren. Es findet dennoch praktisch kein Wärmeaustausch zwischen der Zuluft und der Abluft statt, selbst wenn der Speichermassering 20 rotieren sollte. Auch kann man bei geöffneten Klappen 52, 53 den Speichermassering 20 zur Einsparung von Betriebskosten und Verschleißverringerung stillsetzen.

Um bei Sommerbetrieb die Lüftung in dem an das Dach 10 untenseitig angrenzenden Gebäuderaum 64 zu verstärken, kann man bei dem dargestellten Wärmerückgewinner 11 den Zuluft-Ventilator 41 auf Abluftförderung umstellen, indem man ihn gemäß dem Pfeil 39 im ganzen einschließlich der Düse 34 in die um 180° geschwenkte Stellung verschwenkt, in der er nunmehr Abluft aus dem Raum 64 ansaugt und, wie durch den strichzweipunktierten Strömungspfeil angedeutet, durch die Luftdurchtrittsöffnung 51 unter Umgehung der Speichermasse 21 direkt ins Freie ausbläst. Auch bei dem ständigen Abluftkanal 12 ist dann die Klappe 52 geöffnet und der Ventilator 40 fördert dann ebenfalls Abluft an der Speichermasse 21 vorbei direkt ins Freie. Hierdurch wird nicht nur die Lüftung verstärkt, sondern bei Radialventilatoren mit rückwärtsgekrümmten Schaufeln wird auch die Leitungsaufnahme der Motoren 35 verringert, also ihre Betriebskosten verringert, was besonders bedeutsame Betriebskostenverringerung sein kann, wenn man, wie erwähnt, hierbei auch die Drehzahlen dieser beiden Ventilatoren 40, 41 reduziert.

Das Öffnen und Schließen der Klappe 53 oder beider Klappen 52, 53 kann mit der 180°-Schwenkbewegung des Ventilators 41 gekoppelt sein, wobei im Sommerbetrieb beide Ventilatoren Abluft durch die geöffneten Klappen 52, 53 unter Umgehung der Speichermasse 21 fördern können.

Der Antrieb des Speichermasseringes 20 kann anstatt durch einen Motor in manchen Fällen auch durch den Luftstrom erfolgen. Und zwar in diesem Ausführungsbeispiel durch den aus dem Ventilatorrad 37 austretenden Luftstrom, indem dieser mit einer in Umfangsrichtung des Speichermasseringes 20 gerichteten Geschwindigkeitskomponenten in die Speichermasse 21 eintritt. Infolge der Umlenkung der Luft in die Kanäle der Speichermasse 21 in axiale Richtung entsteht ein Impuls, der den Speichermassering 20 in Rotation versetzt. Ferner können die Drehrichtungen beider Ventilatoren 40, 41 so aufeinander abgestimmt sein, daß, wenn beide Ventilatoren 40, 41 Abluft fördern, die Umfangskomponenten der Austrittsgeschwindigkeit die Drehung der Speichermasse aufheben, so daß diese in diesem Fall dann nicht rotiert.

Die dargestellte Anordnung der Elektromotoren 35 der Ventilatoren 40, 41 hat auch den Vorteil, daß ihre Wärme im Falle des Zuluftventilators 41 der Zuluft direkt und im Falle des Abluftventilators 40 der Zuluft indirekt über die Speichermasse 21 zugeführt wird und so als Nutzwärme anfällt.

Es ist ohne weiteres, falls erwünscht, auch möglich, für den ebenfalls wahlweisen Einsatz eines solchen Wärmerückgewinners als reine Belüftungsvorrichtung ohne Wärmerückgewinnung an die Gehäuseöffnungen 50 und/oder 51 weiterführende Luftkanäle anzuschließen, um bspw. die Zuluft von einer von diesem Wärmerückgewinner weiter entfernten Stelle anzusaugen oder die Abluft an einer oder mehreren anderen Stellen auszublasen oder sie irgendeiner weiteren Verwendung zuzuführen. Wenn die Öffnung 50 und/oder 51 durch Öffnen der Klappe 52 bzw. 53 geöffnet ist bzw. sind, um so direkt in die Außenatmosphäre oder in mindestens einen weiterführenden Kanal zu führen, tritt die von dem betreffenden Ventilator 40 bzw. 41 geförderte Luft dann im wesentlichen oder vollständig nur durch diese Öffnung 50 bzw. 51 hindurch wegen des hohen Luftwiderstandes der Speichermasse 21, so daß der Wärmerückgewinner nur als Belüftungsvorrichtung ohne Wärmerückgewinnung bei vorzugsweise stillstehendem Speichermassering 20 arbeiten kann. Man kann dabei oft mit Vorteil auch vorsehen, bei geöffneter Klappe 52 und/oder Klappe 53 die in dem betreffenden Kanal 12 bzw. 13 befindliche Hälfte der Speichermasse bzw. die gesamte Speichermasse luftseitig vorzugsweise selbsttätig abzusperren. Dies kann besonders einfach durch die Klappe 52 bzw. 53 selbsttätig bei ihrem Öffnen und Schließen erfolgen, indem man sie in ihrer Größe hierfür geeignet ausbildet und am Gehäuse entsprechend geeignet schwenkbar lagert oder auf sonstige Weise führt.

**Patentansprüche**

1. Der Raumbelüftung und Wärmerückgewinnung dienender regenerativer Wärmerückgewinner zum vertikalen Einbau in ein Dach eines Gebäudes oder dergl., welcher Wärmerückgewinner eine rotierend antreibbare, von Luft axial durchströmbare Speichermasse aufweist, die sich zum Teil in einem Zuluftkanal und zum Teil in einem Abluftkanal des Wärmerückgewinners befindet, wobei im Zuluft- und im Abluftkanal je ein dem Fördern der Zuluft und der Abluft dienendes Ventilatorrad angeordnet ist, dadurch gekennzeichnet, daß die Speichermasse (21) in einem Speichermassering (20) angeordnet ist, durch dessen mittige Öffnung ein stromaufwärtiger Abluftkanalabschnitt (12a) und ein stromabwärtiger Zuluftkanalabschnitt (13a) axial hindurchführen, die von der Abluft und der Zuluft gegensinnig durchströmbar sind, wobei der stromaufwärtige Abluftkanalabschnitt (12a) über einen 180°-Kanalzwischenabschnitt (12b) mit einem Speichermasse (21) des Speichermasseringes enthaltenden stromabwärtigen Kanalabschnitt (12c) des Abluftkanales (12) und der stromabwärtige Zuluftkanalabschnit (13a) über einen 180°-Kanalzwischenabschnitt (13b) mit einem Speichermasse (21) des Speichermasseringes enthaltenden stromaufwärtigen Kanalabschnitt (13c) des Zuluftkanales (13) verbunden sind.

2. Wärmerückgewinner nach Anspruch 1, dadurch gekenzeichnet, daß die Ventilatorräder (37, 37') in den beiden 180°-Kanalzwischenabschnitten (12b ; 13b) angeordnet sind.

3. Wärmerückgewinner nach Anspruch 1 oder 2, dadurch gekennzeichnet, daß das in dem Zuluftkanal (13) befindliche Ventilatorrad (37') um 180° in eine dem Fördern von Abluft dienende Stellung schwenkbar ist.

4. Wärmerückgewinner nach Anspruch 2, dadurch gekennzeichnet, daß der Zuluftkanal (13) zwischen dem Speichermassering (20) und dem Ventilatorrad (37') einen absperrbaren Zusatzeinlaß (51) für Zuluft aufweist, der ggfs. auch als ein Abluftauslaß dienen kann, und/oder daß der Abluftkanal (12) zwischen dem Ventilatorrad (37) und dem Speichermassering (20) einen absperrbaren Zusatzauslaß (50) für Abluft aufweist.

5. Wärmerückgewinner nach einem der vorhergehenden Ansprüche, dadurch gekennzeichnet, daß die Drehzahl mindestens eines Ventilatorrades (37, 37') verstellbar ist, vorzugsweise die Ventilatorräder durch polumschaltbare Motoren angetrieben sind.

6. Wärmerückgewinner nach einem der vorhergehenden Ansprüche, dadurch gekennzeichnet, daß der Speichermassering (20) mittels an seiner Unterseite anliegenden Tragrollen (24) getragen und durch an seinem Innenmantel (22) anliegende Stützrollen (25) radial abgestützt ist.

7. Wärmerückgewinner nach einem der vorhergehenden Ansprüche, dadurch gekennzeichnet, daß er eine im Abstand oberhalb des Daches anzuordnende Haube (14) aufweist, die durch eine mittlere Trennwand (16) in zwei Hälften für die Zuluft und Abluft unterteilt ist und innerhalb der sich der Speichermassering (20) befindet.

8. Wärmerückgewinner nach einem der vorhergehenden Ansprüche, dadurch gekennzeichnet, daß die die mittige Öffnung des Speichermasseringes (20) durchdringenden Ab- und Zuluftkanalabschnitte (12a, 13a) in einem zentralen Stutzen (17) vorgesehen sind, der über den normalen Zulufteinlaß (71) und den normalen Abluftauslaß (70) nach unten zum Einsetzen in eine Dachöffnung (18) übersteht und vorzugsweise auch dem Tragen des Wärmerückgewinners (11) dient.

9. Wärmerückgewinner nach einem der vorhergehenden Ansprüche, dadurch gekennzeichnet, daß auch die die Ventilatorräder (37, 37') antreibenden Elektromotoren in dem Zuluftkanal und Abluftkanal angeordnet sind.

10. Wärmerückgewinner nach einem der vorhergehenden Ansprüche, dadurch gekennzeichnet, daß die Ventilatorräder als Laufräder (37, 37') von Radialventilatoren ausgebildet sind.

11. Wärmerückgewinner nach Anspruch 10, dadurch gekennzeichnet, daß die Luftaustrittsöffnungen der Laufräder (37, 37') frei in den Zuluftkanal (13) bzw. den Abluftkanal (12) münden, so daß diese Laufräder frei in den Zuluft- bzw. Abluftkanal ausblasend angeordnet sind.

12. Wärmerückgewinner nach einem der vorhergehenden Ansprüche, dadurch gekennzeichnet, daß der Speichermassering (20) im wesentlichen aus einem Ring aus axial von der Zuluft und der Abluft durchströmbarer Speichermasse (21) besteht, der vorzugsweise zwischen einem luftundurchlässigen Innenmantel und einem luftundurchlässigen Außenmantel gehalten ist.

**Claims**

1. A regenerative heat recoverer used for room ventilation and heat recovery to be inserted vertically in a roof of a building or the like, which heat recoverer comprises a storage mass which can be driven rotatably and can be traversed axially by air and which is disposed partly in a supply air duct and partly in an exhaust air duct of the heat recoverer, one impeller which is used for conveying the supply air and the exhaust air being provided in each case in the supply air duct and in the exhaust air duct, characterized in that the storage mass (21) is arranged in a storage mass ring (20), the central opening of which is axially traversed by an exhaust air duct portion (12a) upstream of the flow and a supply air duct (13a) downstream of the flow, through which the exhaust air and the supply air can pass in counterflow, the exhaust air duct portion (12a) upstream of the flow being connected by way of an 180° intermediate portion (12b) of the duct to a duct portion (12c) of the exhaust air duct (12) downstream of the flow and containing the storage mass (21) of the storage mass ring (20) and the supply air duct portion (13a) downstream of the flow being connected by way of an 180° intermediate portion (13b) of the duct to a duct portion (13c) of the supply air duct (13) upstream of the flow and containing the storage mass (21) of the storage mass ring.

2. A heat recoverer according to Claim 1, characterized in that the impellers (37, 37') are disposed in the two 180° intermediate portions (12b ; 13b) of the duct.

3. A heat recoverer according to Claim 1 or 2, characterized in that the impeller (37') disposed in the supply duct (13) can be pivoted through 180° into a position used for conveying exhaust air.

4. A heat recoverer according to Claim 2, characterized in that the supply air duct (13) comprises between the storage mass ring (20) and the impeller (37') an additional inlet (51) — which can be closed off — for supply air which where necessary can also be used as an exhaust air outlet, and/or the exhaust air duct (12) comprises between the impeller (37) and the storage mass ring (20) an additional outlet (50) — which can be closed off — for supply air.

5. A heat recoverer according to any one of the preceding Claims, characterized in that the rotational speed of at least one impeller (37, 37') is adjustable, and the impellers are preferably driven by motors with reversible poles.

6. A heat recoverer according to any one of the preceding Claims, characterized in that the storage mass ring (20) is held by means of carrying rollers (24) bearing on its underside and is supported radially by support rollers (25) bearing on its inner cover (22).

7. A heat recoverer according to any one of the preceding Claims, characterized in that it comprises a hood (14) which is to be disposed at a distance above the roof and which is divided into two halves for the supply air and the exhaust air by a central partition wall (16) and inside which the storage mass ring (20) is disposed.

8. A heat recoverer according to any one of the preceding Claims, characterized in that the discharge and supply air duct portions (12a, 13a) passing through the central opening of the storage mass ring (20) are provided in a central socket (17) which projects downwards beyond the normal supply air inlet (71) and the normal exhaust air outlet (70) for insertion into a roof opening (18) and is preferably also used for carrying the heat recoverer (11).

9. A heat recoverer according to any one of the preceding Claims, characterized in that the electric motors driving the impellers (37, 37') are also disposed in the supply air duct and the exhaust air duct.

10. A heat recoverer according to any one of the preceding Claims, characterized in that the impellers are constructed as blower wheels (37, 37') of radial fans.

11. A heat recoverer according to Claim 10, characterized in that the air outlet openings of the blower wheels (37, 37') open freely into the supply air duct (13) and the exhaust air duct (12) respectively, so that these blower wheels are arranged so as to blow out freely into the supply air duct and the exhaust air duct respectively.

12. A heat recoverer according to any one of the preceding Claims, characterized in that the storage mass ring (20) essentially comprises a ring of storage mass (21) through which the supply air and the exhaust air can pass axially and which is preferably held between an inner air-impermeable cover and an outer air-impermeable cover.

**Revendications**

1. Récupérateur de chaleur à régénération servant à l'aération de locaux et à la récupération de chaleur, pour l'installation verticale dans un toit d'un bâtiment ou analogue, lequel récupérateur de chaleur présente une masse d'accumulation pouvant être entraînée en rotation, pouvant être parcourue axialement par de l'air, qui se trouve en partie dans un canal d'arrivée d'air et en partie dans un canal d'échappement d'air du récupérateur de chaleur, une roue de ventilateur qui sert au transport de l'air entrant étant disposée dans le canal d'arrivée d'air et une autre qui sert au transport de l'air sortant dans le canal d'échappement d'air, caractérisé en ce que la masse d'accumulation (21) est disposée dans un anneau de masse d'accumulation (20) à travers l'ouverture centrale duquel passent axialement un tronçon d'amont de canal d'échappement d'air (12a) et un tronçon d'aval de canal d'arrivée d'air (13a) qui peuvent être parcourus en sens opposé par l'air sortant et l'air entrant, le tronçon d'amont de canal d'échappement d'air (12a) étant relié par l'intermédiaire d'un tronçon intermédiaire de canal à 180° (12b) à un tronçon d'aval (12c) du canal d'échappement d'air (12) contenant de la masse d'accumulation (21) de l'anneau de masse d'accumulation et le tronçon d'aval de canal d'arrivée d'air (13a), par l'intermédiaire d'un tronçon intermédiaire de canal à 180° (13b), à un tronçon d'amont (13c) du canal d'arrivée d'air (13), contenant de la masse d'accumulation (21) de l'anneau de masse d'accumulation.

2. Récupérateur de chaleur selon la revendication 1, caractérisé en ce que les roues de ventilateur (37, 37') sont disposées dans les deux tronçons intermédiaires de canal à 180° (12b ; 13b).

3. Récupérateur de chaleur selon l'une des revendications 1 et 2, caractérisé en ce que la roue de ventilateur (37') se trouvant dans le canal d'arrivée d'air (13) peut pivoter de 180°, à une position servant au transport d'air d'échappement.

4. Récupérateur de chaleur selon la revendication 2, caractérisé en ce que le canal d'arrivée d'air (13) présente, entre l'anneau de masse d'accumulation (20) et la roue de ventilateur (37'), une admission supplémentaire (51) d'air entrant pouvant être barrée, qui peut éventuellement aussi servir d'échappement d'air sortant, et/ou en ce que le canal d'échappement d'air (12) présente, entre la roue de ventilateur (37) et l'anneau de masse d'accumulation (20), un échappement supplémentaire d'air sortant (50) pouvant être barré.

5. Récupérateur de chaleur selon l'une des revendications précédentes, caractérisé en ce que la vitesse de rotation d'au moins une roue de ventilateur (37, 37') est réglable, de préférence, en ce que les roues de ventilateur sont entraînées par des moteurs à inversion de pôles.

6. Récupérateur de chaleur selon l'une des revendications précédentes, caractérisé en ce que l'anneau de masse d'accumulation (20) est porté au moyen de galets porteurs (24) s'appliquant à son côté inférieur et soutenu radialement par des galets de soutien (25) s'appliquant à sa paroi latérale intérieure (22).

7. Récupérateur de chaleur selon l'une des revendications précédentes, caractérisé en ce qu'il présente un dôme (14) à disposer avec espacement au-dessus du toit, qui est subdivisé par une cloison centrale (16) en deux moitiés pour l'air entrant et l'air sortant et à l'intérieur duquel se trouve l'anneau de masse d'accumulation (20).

8. Récupérateur de chaleur selon l'une des revendications précédentes, caractérisé en ce que les tronçons de canal d'échappement et d'arrivée d'air (12a, 13a) traversant l'ouverture centrale de l'anneau de masse d'accumulation (20) sont prévus dans une tubulure centrale (17) qui dépasse vers le bas l'admission normale d'air (71) et l'échappement normal d'air (70) pour l'insertion dans une ouverture (18) du toit et sert, de préférence, aussi à porter le récupérateur de chaleur (11).

9. Récupérateur de chaleur selon l'une des revendications précédentes, caractérisé en ce que les moteurs électriques entraînant les roues de ventilateur (37, 37') sont aussi disposés dans le canal d'arrivée d'air et le canal d'échappement d'air.

10. Récupérateur de chaleur selon l'une des revendications précédentes, caractérisé en ce que les roues de ventilateur sont conçues sous forme de rotors (37, 37') de ventilateurs radiaux.

11. Récupérateur de chaleur selon la revendication 10, caractérisé en ce que les ouvertures de sortie d'air des rotors (37, 37') débouchent librement dans le canal d'arrivée d'air (13) et le canal d'échappement d'air (12), de sorte que ces rotors sont disposés de manière à souffler librement dans les canaux d'arrivée et d'échappement d'air.

12. Récupérateur de chaleur selon l'une des revendications précédentes, caractérisé en ce que l'anneau de masse d'accumulation (20) est essentiellement formé d'un anneau de masse d'accumulation (21) pouvant être parcourue axialement par l'air entrant et l'air sortant, qui est, de préférence, retenu entre une paroi latérale intérieure imperméable à l'air et une paroi latérale extérieure imperméable à l'air.